# EUROPEAN PATENT APPLICATION

(11) **EP 1 860 479 A1**
(43) Date of publication of application: **28.11.2007**
(21) Application number: 06714106.9
(22) Date of filing: 20.02.2006
(51) Int. Cl.: G02B 19/00, F21V 11/00, G02F 1/13, H01L 33/00

(54) **ILLUMINATION SYSTEM**

(30) Priority: 18.03.2005 JP 2005080481; 28.04.2005 JP 2005132779
(71) Applicant: Harison Toshiba Lighting Corporation, Imabari-shi, Ehime 794-8510 (JP)
(72) Inventor: ARAI, Toshiyuki c/o Harison Toshiba Lighting Corp., Ehime 794-8510 (JP); SENZAKI, Shigeru c/o Harison Toshiba Lighting Corp., Ehime 794-8510 (JP); INOUE, Hideo c/o Harison Toshiba Lighting Corp., Ehime 794-8510 (JP); MATSUBA,Yoshiaki c/o Harison Toshiba Lighting Corp., Ehime 794-8510 (JP)
(74) Representative: Kramer - Barske - Schmidtchen
(86) International application number: PCT/JP2006/302966
(87) International publication number: WO 2006/100857

(57) **Abstract**

There is provided a lighting system simple in configuration and capable of irraditing an irradiation image with less distortion onto an irradiation surface. For this reason, light shielding masks 24 causing light from an LED 12 to be incident on lens units 23b are arranged oppositely to a fly-eye lens 23. The opening shape of a light shielding unit 24b arranged on the light shielding mask 24 is set according to the state where the fly-eye lens 23 opposes an irradiation surface 100, and the light shielding unit 24b prohibits light in a range distorting the shape of an irradiation image on the irradiation surface 100 from being incident on the lens units 23b.

## Description

### Technical Field

The present invention relates to a lighting system for irradiating light emitted from a light source onto an irradiation surface at a uniform illuminance using a fly-eye lens.

### Background Art

In general, it is desirable to irradiate light at a uniform illuminance onto an irradiation area when the irradiation area set on the irradiation surface is illuminated with a lighting system. As disclosed in Japanese Patent Laid-Open No. 2001-337204, for example, causing light from a light source to be incident on a fly-eye lens in which a plurality of lens units are arranged in a matrix enables irradiating light at a uniform illuminance onto the irradiation area.

In general, since each lens unit of the fly-eye lens is flat and rectangle, a lighting system using the fly-eye lens is effective for uniformly illuminating particularly a rectangular irradiation area. On the other hand, if the irradiation area is set to be rectangular, the distortion of an irradiation image attributed to spherical aberration and the like due to the curved surface of a lens of each lens unit conspicuously appears. In particular, if it is difficult to arrange a lighting system (fly-eye lens) directly opposite to the irradiation surface from constraints of layout and the like, the distortion of the irradiation image is more conspicuous at four corners.

To cope with the above, the curved surface of a lens of each lens unit may be separately designed according to applications to make the curved surface of a lens aspherical to correct the distortion of the irradiation image, however, subjecting the curved surface of a lens of each lens unit to a fine processing according to applications may lead to increase in production cost.

The present invention has for its purpose to provide a lighting system simple in configuration and capable of irradiating an irradiation image with less distortion onto an irradiation surface.

### Disclosure of Invention

### Means for Solving the Problem

According to the present invention, a lighting system includes a fly-eye lens having a plurality of lens units receiving outgoing light from a light source, superimposing the light on each other and outputting the light onto an irradiation area on an irradiation surface; and light shielding means limiting light incident on the lens units of the fly-eye lens from the light source; wherein the light shielding means is set according to the state where the fly-eye lens opposes the irradiation surface and prohibits light in a range distorting the shape of an irradiation image on the irradiation surface from being incident on the lens units.

### Brief Description of the Drawings

Fig. 1 is a cross section illustrating principle parts of a lighting system according to a first embodiment of the present invention;
Fig. 2 is an exploded perspective view of the lighting system according to the first embodiment of the present invention;
Fig. 3 is a diagram illustrating a coordinate system with respect to the irradiation surface of a fly-eye lens according to the first embodiment of the present invention;
Fig. 4A is a diagram illustrating one example of a light shielding unit for the case where the fly-eye lens directly opposes the irradiation surface according to the first embodiment of the present invention;
Fig. 4B is a diagram illustrating one example of the irradiation image corrected by the light shielding unit in Fig. 4A for the case where the fly-eye lens is directly opposite to the irradiation surface according to the first embodiment of the present invention;
Fig. 5A is a diagram illustrating one example of the light shielding unit for the case where the fly-eye lens tilts around the X axis in Fig. 3 with respect to the irradiation surface according to the first embodiment of the present invention;
Fig. 5B is a diagram illustrating one example of an irradiation image corrected by the light shielding unit in Fig. 5A for the case where the fly-eye lens tilts around the X axis in Fig. 3 with respect to the irradiation surface according to the first embodiment of the present invention;
Fig. 6A is a diagram illustrating one example of the light shielding unit for the case where the fly-eye lens tilts around the Y axis in Fig. 3 with respect to the irradiation surface according to the first embodiment of the present invention;
Fig. 6B is a diagram illustrating one example of an irradiation image corrected by the light shielding unit in Fig. 6A for the case where the fly-eye lens tilts around the Y axis in Fig. 3 with respect to the irradiation surface according to the first embodiment of the present invention;
Fig. 7A is a diagram illustrating one example of the light shielding unit for the case where the fly-eye lens tilts around the Z axis in Fig. 3 with respect to the irradiation surface according to the first embodiment of the present invention;
Fig. 7B is a diagram illustrating one example of an irradiation image corrected by the light shielding unit in Fig. 7A for the case where the fly-eye lens tilts around the Z axis in Fig. 3 with respect to the irradiation surface according to the first embodiment of the present invention;
Fig. 8A is a diagram illustrating one example of the light shielding unit for the case where the fly-eye lens tilts around the X and the Y axes with respect to the irradiation surface according to the first embodiment of the present invention;
Fig. 8B is a diagram illustrating one example of an irradiation image corrected by the light shielding unit in Fig. 8A for the case where the fly-eye lens tilts around the X and the Y axes with respect to the irradiation surface according to the first embodiment of the present invention;
Fig. 9A is a diagram illustrating one example of the light shielding unit for the case where the fly-eye lens tilts around the X and the Y' axes with respect to the irradiation surface according to the first embodiment of the present invention;
Fig. 9B is a diagram illustrating one example of an irradiation image corrected by the light shielding unit in Fig. 9A for the case where the fly-eye lens tilts around the X and the Y' axes with respect to the irradiation surface according to the first embodiment of the present invention;
Fig. 10A is a diagram illustrating one example of the light shielding unit for the case where the fly-eye lens tilts around the X and the Z axes with respect to the irradiation surface according to the first embodiment of the present invention;
Fig. 10B is a diagram illustrating one example of an irradiation image corrected by the light shielding unit in Fig. 10A for the case where the fly-eye lens tilts around the X and the Z axes with respect to the irradiation surface according to the first embodiment of the present invention;
Fig. 11 is a cross section illustrating principle parts of a lighting system according to a second embodiment of the present invention;
Fig. 12 is an exploded perspective view of the lighting system according to the second embodiment of the present invention;
Fig. 13 is a schematic diagram illustrating the control system of a liquid crystal panel according to the second embodiment of the present invention; and
Fig. 14 is a flow chart illustrating a routine for controlling the display of the light shielding unit according to the second embodiment of the present invention.

### Best Mode for Carrying Out the Invention

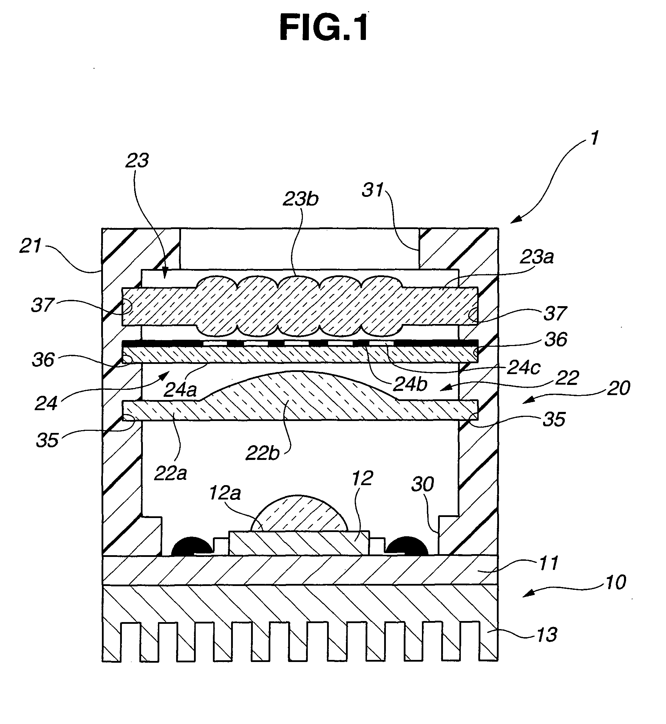

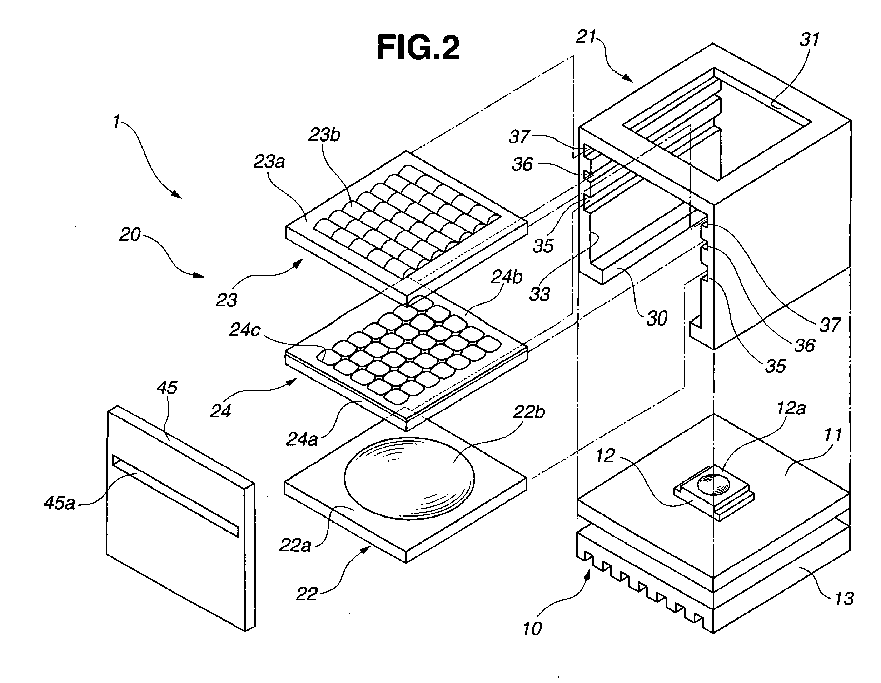

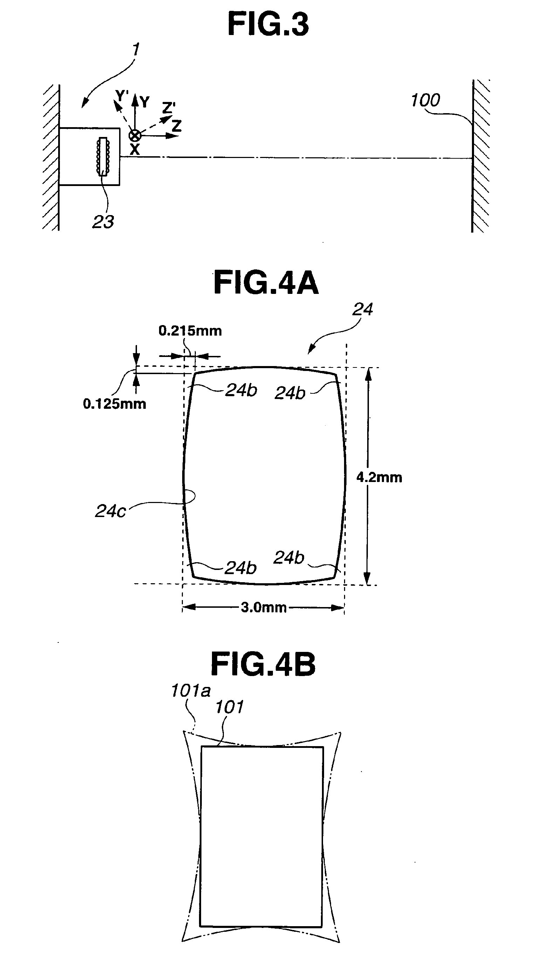

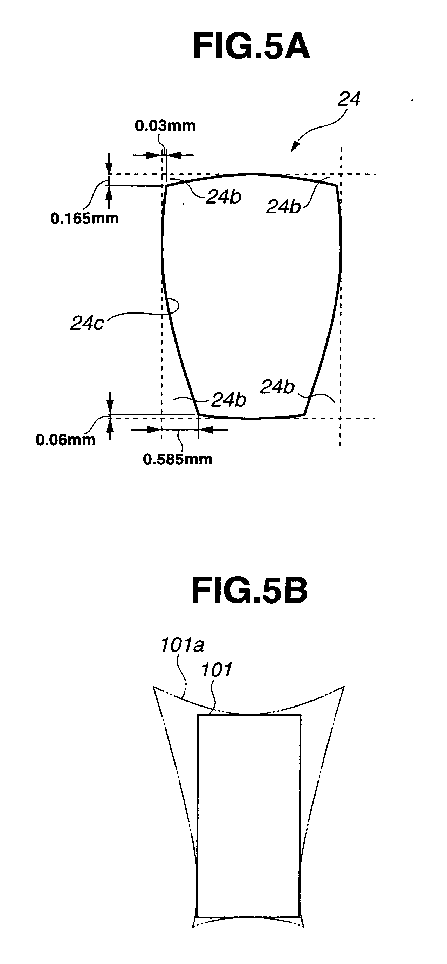

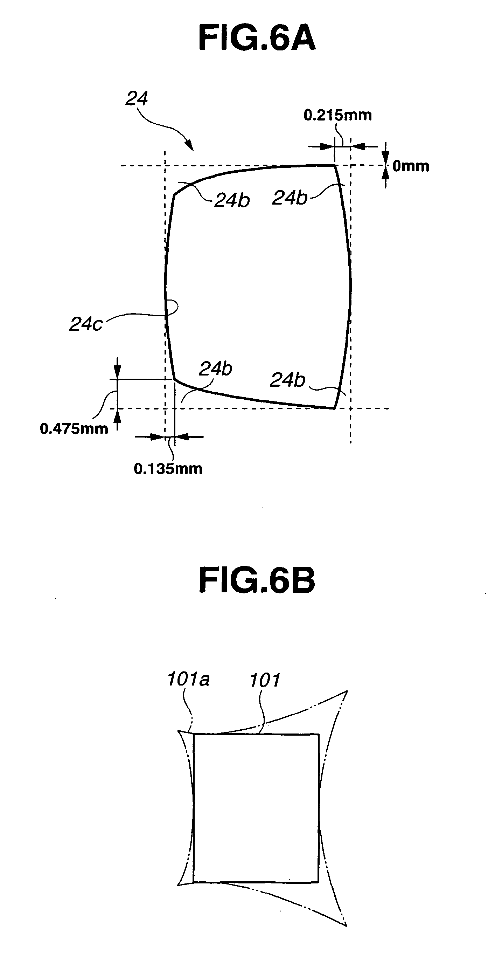

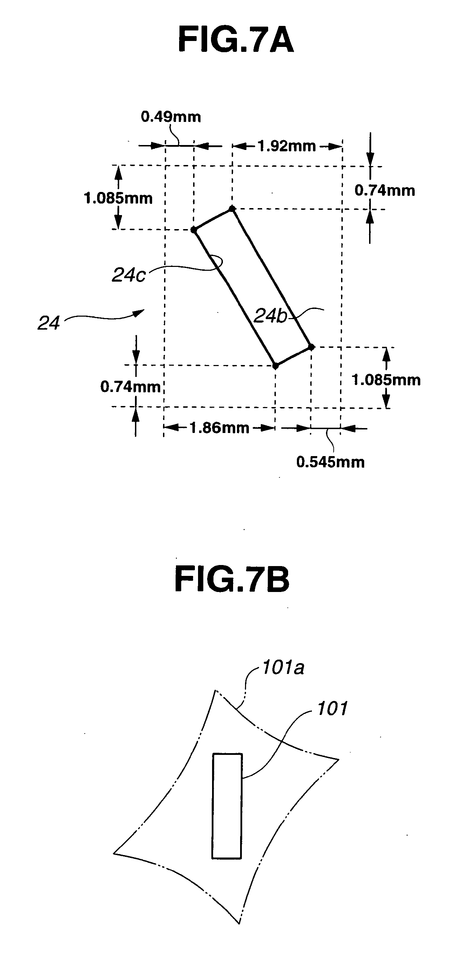

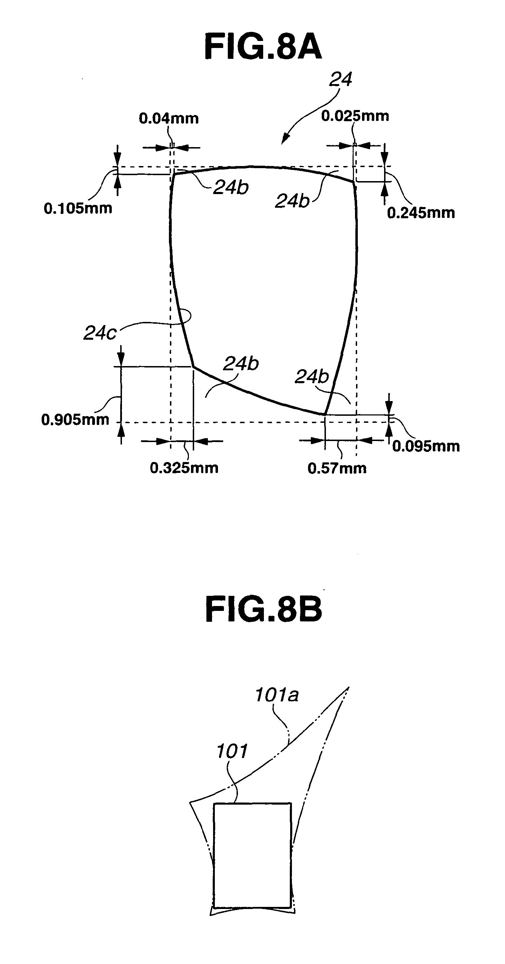

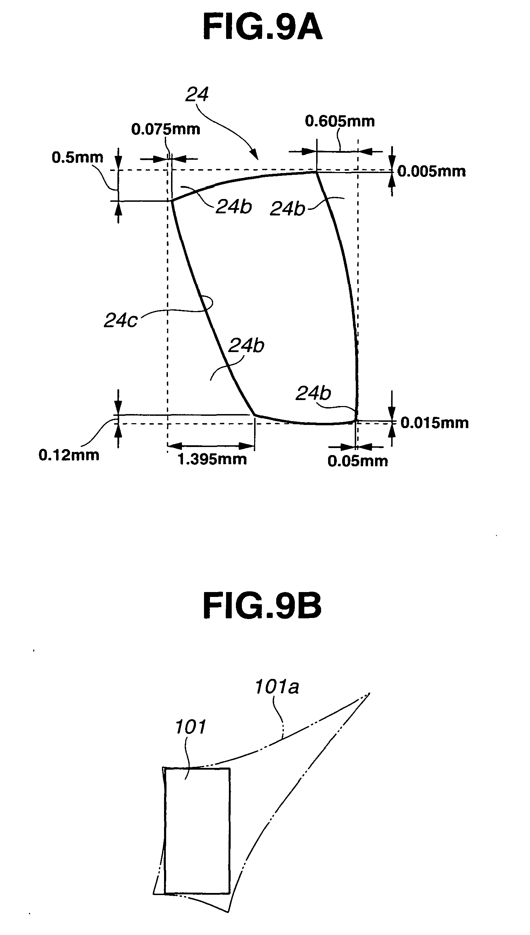

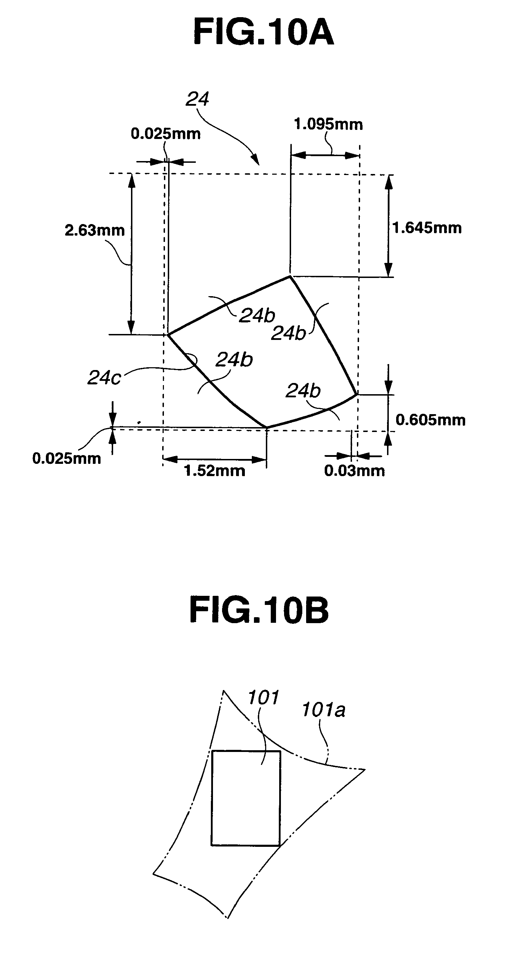

The embodiment of the present invention is described below with reference to the drawings. Figs. 1 to 10B are related to the first embodiment of the present invention. Fig. 1 is a cross section illustrating principle parts of a lighting system. Fig. 2 is an exploded perspective view of the lighting system. Fig. 3 is a diagram illustrating a coordinate system with respect to the irradiation surface of a fly-eye lens. Fig. 4A is a diagram illustrating one example of a light shielding unit for the case where the fly-eye lens directly opposes the irradiation surface. Fig. 4B is a diagram illustrating one example of the irradiation image corrected by the light shielding unit in Fig. 4A for the case where the fly-eye lens directly opposes the irradiation surface. Fig. 5A is a diagram illustrating one example of the light shielding unit for the case where the fly-eye lens tilts around the X axis in Fig. 3 with respect to the irradiation surface. Fig. 5B is a diagram illustrating one example of an irradiation image corrected by the light shielding unit in Fig. 5A for the case where the fly-eye lens tilts around the X axis in Fig. 3 with respect to the irradiation surface. Fig. 6A is a diagram illustrating one example of the light shielding unit for the case where the fly-eye lens tilts around the Y axis in Fig. 3 with respect to the irradiation surface. Fig. 6B is a diagram illustrating one example of an irradiation image corrected by the light shielding unit in Fig. 6A for the case where the fly-eye lens tilts around the Y axis in Fig. 3 with respect to the irradiation surface. Fig. 7A is a diagram illustrating one example of the light shielding unit for the case where the fly-eye lens tilts around the Z axis in Fig. 3 with respect to the irradiation surface. Fig. 7B is a diagram illustrating one example of an irradiation image corrected by the light shielding unit in Fig. 7A for the case where the fly-eye lens tilts around the Z axis in Fig. 3 with respect to the irradiation surface. Fig. 8A is a diagram illustrating one example of the light shielding unit for the case where the fly-eye lens tilts around the X and the Y axes with respect to the irradiation surface. Fig. 8B is a diagram illustrating one example of an irradiation image corrected by the light shielding unit in Fig. 8A for the case where the fly-eye lens tilts around the X and the Y axes with respect to the irradiation surface. Fig. 9A is a diagram illustrating one example of the light shielding unit for the case where the fly-eye lens tilts around the X and the Y' axes with respect to the irradiation surface. Fig. 9B is a diagram illustrating one example of an irradiation image corrected by the light shielding unit in Fig. 9A for the case where the fly-eye lens tilts around the X and the Y' axes with respect to the irradiation surface. Fig. 10A is a diagram illustrating one example of the light shielding unit for the case where the fly-eye lens tilts around the X and the Z axes with respect to the irradiation surface. Fig. 10B is a diagram illustrating one example of an irradiation image corrected by the light shielding unit in Fig. l0A for the case where the fly-eye lens tilts around the X and the Z axes with respect to the irradiation surface.

In Figs. 1 and 2, reference numeral 1 denotes a lighting system irradiating light onto an irradiation surface 100 from a fixed position set on a wall surface and the like. The lighting system 1 includes, for example, a light source unit 10 using a surface-mount light emitting diode (LED) 12, to an outgoing plane 12a of which a plano-convex lens is fixed, as a light source, and a lens optical system unit 20 putting over the light source unit 10.

The light source unit 10 includes an LED substrate 11. The LED substrate 11 holds the LED 12 soldered at its substantially central portion and electrically connects the held LED 12 to a power supply circuit (not shown). A radiation fin 13 is fixed to the other surface of the LED substrate 11 to improve the light emitting efficiency of the LED 12.

The lens optical system unit 20 includes a lens housing 21, a collimation lens 22 housed and held in the lens housing 21 and a fly-eye lens 23. The lens optical system unit 20 further includes a light shielding mask 24 being light shielding means opposing the incident surface of the fly-eye lens 23 inside the lens housing 21.

In the present embodiment, as illustrate in Fig. 2, the lens housing 21 is substantially rectangular cylindrical, and an LED inserting inlet 30 is opened at one end of the optical axis direction of the lens housing 21. An outgoing outlet 31 of illumination light is opened at the other end of the optical axis direction of the lens housing 21 and at a position opposing the LED inserting inlet 30. As illustrated in Fig. 1, when the lens housing 21 puts over the light source unit 10, the LED 12 is exposed inside the housing through the LED inserting inlet 30 and the outgoing plane 12a of the LED 12 is caused to oppose the outgoing outlet 31.

The lens housing 21 includes a lens inserting inlet 33 opened at one side thereof, and has collimation lens holding grooves 35, light shielding mask holding grooves 36 and fly-eye lens holding grooves 37 opposing each other in the order from the LED inserting inlet 30 on the inner surface of the side walls adjacent to the lens inserting inlet 33.

In Fig. 2, reference numeral 45 denotes a side plate. After the lenses 22 and 23 and light shielding mask 24 are housed in the lens housing 21, the side plate 45 closes the lens inserting inlet 33 of the lens housing 21 by using, for example, an adhesive tape and the like. In the present embodiment, a slot 45a corresponding to the light shielding mask holding grooves 36 is opened in the side plate 45, thorough which the light shielding mask 24 is removably inserted into the light shielding mask holding grooves 36.

The collimation lens 22 is, for example, a lens member in which a lens unit 22b is integrally formed on the outgoing side of a flat and substantially rectangular lens substrate 22a inserted into and held by the collimation lens holding grooves 35. The collimation lens 22 converts incident light from the LED 12 to substantially parallel light by the lens unit 22b to emit the parallel light.

The fly-eye lens 23 is a lens member in which a plurality (for example, 5 x 7) of lens units 23b with an incident surface (curved surface of lens) protruding downward and an outgoing surface (curved surface of lens) protruding upward are integrally formed in a matrix on a flat and substantially rectangular lens substrate 23a inserted into and held by the fly-eye lens holding grooves 37. The fly-eye lens 23 superimposes on each other light incident on each lens unit 23b from the collimation lens 22 to uniformly irradiate light onto a specific irradiation area. In the present embodiment, the dimensions of the lens units 23b are, for example, 3 mm x 4.2 mm in a plan view. The lens units 23b are, for example, 8.3 mm in thickness (inter-top distance). The incident and the outgoing surfaces of the lens units 23b are spherical and the radiuses of curvature thereof are 3.0 mm respectively.

The light shielding mask 24 includes a flat and substantially rectangular light transmissive substrate 24a inserted into and held by the light shielding mask holding grooves 36 and a light shielding unit (shielding film) 24b formed on the light transmissive substrate 24a. The light shielding mask 24 is close to and opposes the incident surface of the fly-eye lens 23 and a light transmissive unit 24c is opened in the light shielding unit 24b at a position corresponding to the lens units 23b of the fly-eye lens 23. That is to say, the light shielding unit 24b defines the light transmissive unit 24c on the light transmissive substrate 24a to limit light incident on the lens units 23b of the fly-eye lens 23 from the LED 12.

In the present embodiment, the light shielding unit 24b is set according to the state where the fly-eye lens 23 opposes the irradiation surface 100 when the lighting system 1 is used and prohibits light in a range distorting the shape of an irradiation image 101 on the irradiation surface 100 from being incident on the lens units 23b. The opening shape of the light shielding unit 24b is set based on experiments or simulation, for example.

Specifically, as illustrated in Fig. 3, when the lighting system 1 is used with the lighting system 1 directly opposing the irradiation surface 100 (or, when the fly-eye lens 23 directly opposes the irradiation surface 100), the shape of the light shielding units 24b with respect to the lens units 23b can be defined by four arcs each having a predetermined curvature as illustrated in Fig. 4A, for example. In Fig. 4A, a rectangular area surrounded by a dotted line is an area opposing the lens unit 23b. In the opposing area, each arc is set so as to contact each border line of the opposing area. The intersections of the arcs exist in illustrated positions with respect to the border lines. Setting the light shielding unit 24b in the above manner enables correcting the distortion of in irradiation image caused by the aberrations of the lens units 23b and the like. In Fig. 4B, reference numeral 101a is an irradiation image obtained on the irradiation surface 100 when light incident on the lens units 23b is not limited by the light shielding mask 24. Reference numeral 101 is an irradiation image obtained on the irradiation surface 100 when light incident on the lens units 23b is limited by the light shielding mask 24.

In addition, the light shielding unit 24b with various opening shapes can be set in the light shielding mask 24 according to the state where the fly-eye lens 23 opposes the irradiation surface 100 when the lighting system 1 is used. For example, when the lighting system 1 is used with the lighting system 1 tilted by 30° upward and downward with respect to the irradiation surface 100 (in other words, the fly-eye lens 23 is rotated by 30° around the X axis of the coordinate system illustrated in Fig. 3 with respect to the irradiation surface 100), the shapes of the light shielding units 24b with respect to the lens units 23b can be defined by four arcs each having a predetermined curvature, as illustrated in Fig. 5A, for example. In Fig. 5A, a rectangular area surrounded by a dotted line is an area opposing the lens unit 23b. In the opposing area, each arc is set so as to contact each border line of the opposing area. The intersections of the arcs exist in illustrated positions with respect to the border lines. Defining the light shielding unit 24b in the above manner enables correcting the distortion of an irradiation image caused by the aberrations of the lens units 23b and a tilt with respect to the irradiation surface 100 and the like. In Fig. 5B, reference numeral 101a is an irradiation image obtained on the irradiation surface 100 when light incident on the lens units 23b is not limited by the light shielding mask 24. Reference numeral 101 is an irradiation image obtained on the irradiation surface 100 when light incident on the lens units 23b is limited by the light shielding mask 24.

For example, when the lighting system 1 is used with the lighting system 1 tilted by 30° leftward and rightward with respect to the irradiation surface 100 (in other words, the fly-eye lens 23 is rotated by 30° around the Y axis of the coordinate system illustrated in Fig. 3 with respect to the irradiation surface 100), the shapes of the light shielding units 24b with respect to the lens units 23b can be defined by four arcs each having a predetermined curvature as illustrated in Fig. 6A, for example. In Fig. 6A, a rectangular area surrounded by a dotted line is an area opposing the lens unit 23b. In the opposing area, each arc is set so as to contact each border line of the opposing area. The intersections of the arcs exist in illustrated positions with respect to the border lines. Defining the light shielding unit 24b in the above manner enables correcting the distortion of an irradiation image caused by the aberrations of the lens units 23b and a tilt with respect to the irradiation surface 100 and the like. In Fig. 6B, reference numeral 101a is an irradiation image obtained on the irradiation surface 100 when light incident on the lens units 23b is not limited by the light shielding mask 24. Reference numeral 101 is an irradiation image obtained on the irradiation surface 100 when light incident on the lens units 23b is limited by the light shielding mask 24.

For example, when the lighting system 1 is used with the lighting system 1 rotated by 30° around the optical axis with respect to the irradiation surface 100 (in other words, the fly-eye lens 23 is rotated by 30° around the Z axis of the coordinate system illustrated in Fig. 3 with respect to the irradiation surface 100), the shapes of the light shielding units 24b with respect to the lens units 23b can be defined by four substantially straight lines, as illustrated in Fig. 7A, for example. In Fig. 7A, a rectangular area surrounded by a dotted line is an area opposing the lens unit 23b. In the opposing area, the intersections of the lines defining the shape of the light shielding unit 24b exist in a position illustrated. Defining the light shielding unit 24b in the above manner enables correcting the distortion of an irradiation image caused by the aberrations of the lens units 23b and a rotation with respect to the irradiation surface 100 and the like. In Fig. 7B, reference numeral 101a is an irradiation image obtained on the irradiation surface 100 when light incident on the lens units 23b is not limited by the light shielding mask 24. Reference numeral 101 is an irradiation image obtained on the irradiation surface 100 when light incident on the lens units 23b is limited by the light shielding mask 24.

For example, when the lighting system 1 is used with the lighting system 1 rotated by 30° upward and downward and by 30° leftward and rightward with respect to the irradiation surface 100 (in other words, the fly-eye lens 23 is rotated by 30° leftward around the X axis and rotated by 30° rightward around the Y axis of the coordinate system illustrated in Fig. 3 with respect to the irradiation surface 100), the shapes of the light shielding units 24b with respect to the lens units 23b can be defined by four arcs each having a predetermined curvature, as illustrated in Fig. 8A, for example. In Fig. 8A, a rectangular area surrounded by a dotted line is an area opposing the lens unit 23b. In the opposing area, the intersections of the arcs which define the shape of the light shielding unit 24b exist in a position illustrated. Defining the light shielding unit 24b in the above manner enables correcting the distortion of an irradiation image caused by the aberrations of the lens units 23b and a tilt with respect to the irradiation surface 100. In Fig. 8B, reference numeral 101a is an irradiation image obtained on the irradiation surface 100 when light incident on the lens units 23b is not limited by the light shielding mask 24. Reference numeral 101 is an irradiation image obtained on the irradiation surface 100 when light incident on the lens units 23b is limited by the light shielding mask 24.

For example, when the lighting system 1 is used with the lighting system 1 rotated by 30° upward and downward with respect to the irradiation surface 100 and furthermore by 30° leftward and rightward with respect to the rotated position (in other words, the fly-eye lens 23 is rotated by 30° rightward around the X axis of the coordinate system illustrated in Fig. 3 and by 30° leftward around the Y' axis (dotted line in Fig. 3) of the coordinate system X-Y'-Z' newly defined by the rotation around the X axis with respect to the irradiation surface 100), the shapes of the light shielding units 24b with respect to the lens units 23b can be defined by four arcs each having a predetermined curvature, as illustrated in Fig. 9A, for example. In Fig. 9A, a rectangular area surrounded by a dotted line is an area opposing the lens unit 23b. In the opposing area, the intersections of the arcs defining the shape of the light shielding unit 24b exist in a position illustrated. Defining the light shielding unit 24b in the above manner enables correcting the distortion of an irradiation image caused by the aberrations of the lens units 23b and a tilt with respect to the irradiation surface 100 and the like. In Fig. 9B, reference numeral 101a is an irradiation image obtained on the irradiation surface 100 when light incident on the lens units 23b is not limited by the light shielding mask 24. Reference numeral 101 is an irradiation image obtained on the irradiation surface 100 when light incident on the lens units 24b is limited by the light shielding mask 24.

For example, when the lighting system 1 is used with the lighting system 1 rotated by 30° upward and downward with respect to the irradiation surface 100 and rotated by 30° around the optical axis (in other words, the fly-eye lens 23 is rotated by 30° rightward around the X axis and rotated by 30° rightward around the Z axis of the coordinate system illustrated in Fig. 3 with respect to the irradiation surface 100), the shapes of the light shielding units 24b with respect to the lens units 23b can be defined by four arcs each having a predetermined curvature, as illustrated in Fig. 10A, for example. In Fig. 10A, a rectangular area surrounded by a dotted line is an area opposing the lens unit 23b. In the opposing area, the intersections of the arcs defining the shape of the light shielding unit 24b exist in a position illustrated. Defining the light shielding unit 24b in the above manner enables correcting the distortion of an irradiation image caused by the aberrations of the lens units 23b and a tilt and a rotation with respect to the irradiation surface 100 and the like. In Fig. 10B, reference numeral 101a is an irradiation image obtained on the irradiation surface 100 when light incident on the lens units 24b is not limited by the light shielding mask 24. Reference numeral 101 is an irradiation image obtained on the irradiation surface 100 when light incident on the lens units 24b is limited by the light shielding mask 24.

The opening shape of the light shielding unit 24b (or the shape of the light transmissive unit 24c opening into the light shielding unit 24b) may be set in various shapes according to the state where the fly-eye lens 23 opposes the irradiation surface 100. The light shielding masks 24 different in the light shielding unit 24b are properly replaceable by inserting and removing the masks through the slot 45a opening into the side plate 45. The light shielding mask 24 in which the opening shape of the light shielding unit 24b is properly set is caused to oppose the fly-eye lens 23 according to the state where the fly-eye lens 23 opposes the irradiation surface 100 when the lighting system 1 is used, thereby enabling correcting the distortion of an irradiation image projected onto the irradiation surface 100.

According to the above embodiment, an irradiation image with less distortion can be irradiated onto the irradiation surface 100 with a simple configuration in such a manner that the light shielding masks 24 causing light from the LED 12 to be incident on the lens units 23b is arranged oppositely to the fly-eye lens 23, the opening shape of the light shielding unit 24b of the light shielding mask 24 is set according to the state where the fly-eye lens 23 opposes the irradiation surface 100 and light in a range distorting the shape of an irradiation image on the irradiation surface 100 is prohibited from being incident on the lens units 23b by the light shielding unit 24b. That is to say, shielding unwanted incident light by the light shielding mask 24 allows irradiating an irradiation image with less distortion on the irradiation surface 100 with a simple configuration without subjecting fine aspheric surface processing to the curved surface of a lens of the lens units 23b forming the fly-eye lens 23.

At this point, a plurality of the light shielding masks 24 in which the opening shape of the light transmissive unit 24c opening into the light shielding unit 24b according to the state where the fly-eye lens 23 opposes the irradiation surface 100 is differently set are prepared. The light shielding masks 24 different in the light shielding unit 24b is caused to replaceably oppose the incident surface of the fly-eye lens 23 to enable irradiating an irradiation image with less distortion onto the irradiation surface in wide applications.

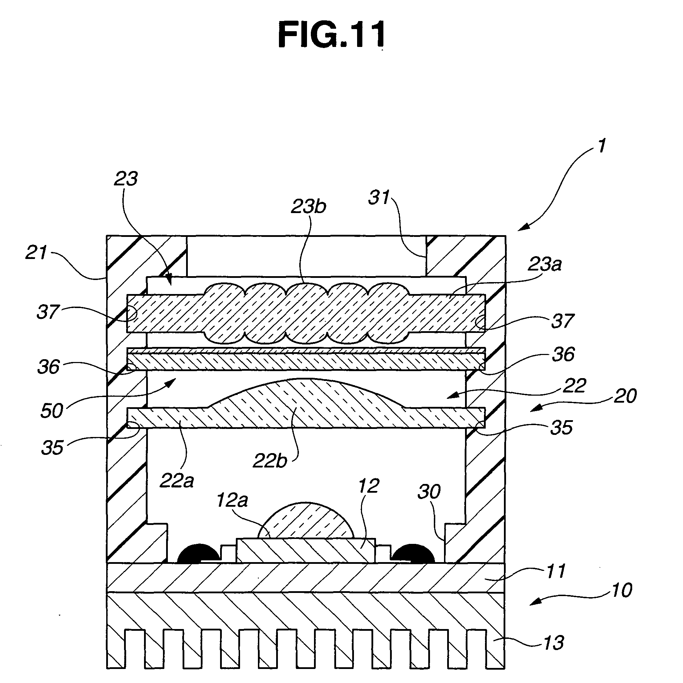

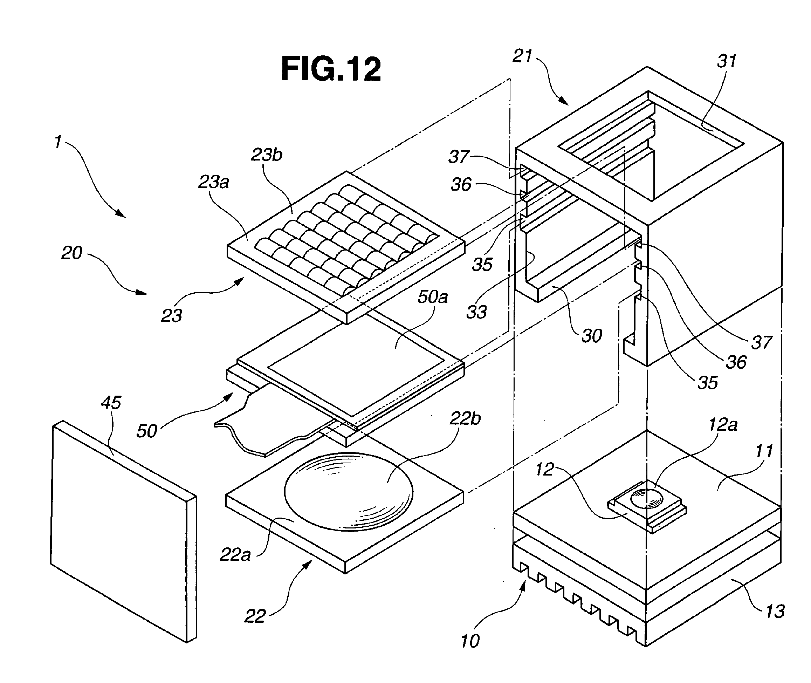

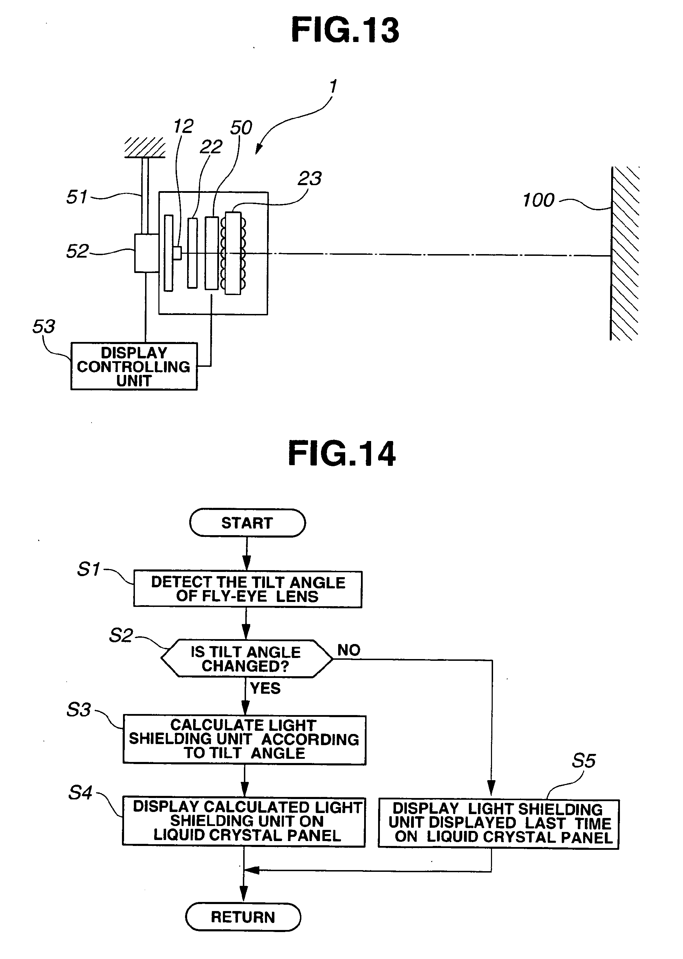

Figs. 11 to 14 are related to the second embodiment of the present invention. Fig. 11 is a cross section illustrating principle parts of a lighting system. Fig. 12 is an exploded perspective view of the lighting system. Fig. 13 is a schematic diagram illustrating the control system of a liquid crystal panel. Fig. 14 is a flow chart illustrating a routine for controlling the display of the light shielding unit. In the present embodiment, the same constituent elements as those in the first embodiment are denoted by the same reference numerals and characters to omit the description thereof.

As illustrated in Figs. 11 and 12, in the present embodiment, the light shielding mask holding grooves 36 formed in the lens housing 21 holds a transmissive liquid crystal panel 50 with the liquid crystal panel 50 opposing the incident surface of the fly-eye lens 23 instead of the light shielding mask 24.

A display controlling unit 53 as display controlling means is connected to the liquid crystal panel 50. The display controlling unit 53 variably displays the light shielding unit corresponding to the lens units 23b on a display unit 50a of the liquid crystal panel 50 according to the state where the fly-eye lens 23 opposes the irradiation surface 100.

Specifically, in the present embodiment, the lighting system 1 includes an angle detecting device 52 for detecting a tilt angle between the fly-eye lens 23 and the irradiation surface 100. As illustrated in Fig. 13, the angle detecting device 52 is connected to a supporting member 51 rotatably supporting the lighting system 1 with a wall surface and the like and detects a tilt angle α around the X axis, a tilt angle β around the Y axis and a tilt angle γ around the Z axis of the fly-eye lens 23 in the coordinate system illustrated in Fig. 3 with respect to the state where the fly-eye lens 23 directly opposes the irradiation surface 100, for example.

The display controlling unit 53 stores information of the light shielding unit mapped in advance according to the tilt angles α, β, γ of the fly-eye lens 23, for example. The display controlling unit 53 variably displays the light shielding unit on the display unit 50a of the liquid crystal panel 50 with reference to the map based on the tilt angle of the fly-eye lens 23 detected by the angle detecting device 52. The shapes of the light shielding unit variably displayed by the display controlling unit 53 on the display unit 50a are obtained by experiments and simulation as is the case with the above first embodiment. The display controlling unit 53 displays the light shielding unit on the display unit 50a of the liquid crystal panel 50 to prohibit light in a range distorting the shape of an irradiation image on the irradiation surface 100 from being incident on the lens units 23b of the fly-eye lens 23 from the LED 12. In other words, the liquid crystal panel 50 realizes a function as light shielding means with the display controlling unit 53.

Control for displaying the light shielding unit executed by the display controlling unit 53 is described according to a flow chart of a routine for controlling the display of the light shielding unit in Fig. 14. The routine is repeated every predetermined time interval. When the routine starts, first, at step S1, the display controlling unit 53 detects the tilt angles (a, β and y) of the fly-eye lens 23 with respect to the irradiation surface 100 through the angle detecting device 52.

At step S2, the display controlling unit 53 determines whether the tilt angle of the fly-eye lens 23 detected at step S1 has been changed from the tilt angle detected last time. If the display controlling unit 53 determines that the tilt angle of the fly-eye lens 23 has been changed, the process advances to step S3. If the display controlling unit 53 determines that the tilt angle of the fly-eye lens 23 has not been changed, the process advances to step S5.

At step S3 following step S2, the display controlling unit 53 calculates the light shielding unit according to the detected tilt angles of the fly-eye lens 23 referring to predetermined map, and at step S4, the display controlling unit 53 displays the calculated light shielding unit on the display unit 50a of the liquid crystal panel 50 and thereafter the process exits the routine.

On the other hand, at step S5 following step S2, the display controlling unit 53 displays the same light shielding unit as that displayed in the last process on the display unit 50a of the liquid crystal panel 50 and thereafter the process exits the routine.

According to the above embodiment, the light shielding unit with respect to the lens units 23b can be changed in real time according to the state where the fly-eye lens 23 opposes the irradiation surface 100, in addition to the effect obtained in the above first embodiment, so that the embodiment can exert an effect that irradiation images with less distortion can be more effectively irradiated onto the irradiation surface 100.

## Claims

1. A lighting system comprising:
a fly-eye lens having a plurality of lens units receiving outgoing light from a light source, superimposing the light on each other and outputting the light onto an irradiation area on an irradiation surface; and
light shielding means limiting light incident on the lens units of the fly-eye lens from the light source, wherein
the light shielding means is set according to the state where the fly-eye lens opposes the irradiation surface and prohibits light in a range distorting the shape of an irradiation image on the irradiation surface from being incident on the lens units.

2. The lighting system according to claim 1 further comprising a plurality of light shielding masks, as the light shielding means, of which light shielding units are set differently in shape according to the state where the fly-eye lens opposes the irradiation surface, wherein
the light shielding masks replaceably oppose the incident surface of the fly-eye lens.

3. The lighting system according to claim 2, wherein
the light shielding mask is inserted into and held by a light shielding mask holding grooves of a housing forming a lens optical system unit, and can be freely inserted into or removed from the housing through a slot opening correspondingly to the light shielding mask holding grooves.

4. The lighting system according to claim 1, wherein
the light shielding means comprises a transmissive liquid crystal panel opposing the incident surface of the fly-eye lens and
display controlling means variably displaying the light shielding unit on the liquid crystal panel according to the state where the fly-eye lens opposes the irradiation surface.

5. The lighting system according to claim 4 and capable of changing the state where the fly-eye lens opposes the irradiation surface by support through a supporting member, the lighting system comprising:
an angle detecting device for detecting the tilt angle of the fly-eye lens with respect to the irradiation surface, wherein
the display controlling means changes the light shielding unit displayed on the liquid crystal panel each time the angle detecting device detects change in the tilt angle of the fly-eye lens.

6. The lighting system according to claim 5, wherein
the angle detecting device detects tilt angles around three axes of the fly-eye lens respectively with respect to the state where the fly-eye lens directly opposes the irradiation surface.

7. The lighting system according to claim 5, wherein
information of the light shielding unit displayed on the liquid crystal panel according to the tilt angle of the fly-eye lens is mapped in advance and stored in the display controlling means.
